Europäisches Patentamt

European Patent Office

Office européen des brevets

(11) Publication number: **0 269 462 B1**

# EUROPEAN PATENT SPECIFICATION

(45) Date of publication of patent specification: **12.08.92**    (51) Int. Cl.⁵: **B01D 39/00**, D04H 1/42

(21) Application number: **87310518.3**

(22) Date of filing: **27.11.87**

(54) **Adsorptive sheet.**

(30) Priority: **27.11.86 JP 280779/86**
**28.11.86 JP 281660/86**
**07.09.87 JP 135551/87 U**

(43) Date of publication of application:
**01.06.88 Bulletin  88/22**

(45) Publication of the grant of the patent:
**12.08.92 Bulletin  92/33**

(84) Designated Contracting States:
**DE GB IT NL**

(56) References cited:
**EP-A- 0 127 851**
**DE-A- 3 531 937**
**FR-A- 2 214 005**
**US-A- 3 082 481**

(73) Proprietor: **UNITIKA LTD.**
**No. 50, Higashihonmachi 1-chome**
**Amagasaki-shi Hyogo(JP)**

(72) Inventor: **Nishikawa, Yasuo**
**No. 1-1-23, Nanryocho**
**Uji-shi Kyoto-fu(JP)**
Inventor: **Nakazima, Yasumasa**
**No. 48-34, Teradahukaya**
**Joyo-shi Kyoto-fu(JP)**

(74) Representative: **Deans, Michael John Percy et al**
**Lloyd Wise, Tregear & CO. Norman House**
**105-109 Strand**
**London WC2R OAE(GB)**

## Description

The present invention relates to adsorptive sheets.

Heretofore, pulverized or granular activated carbon and ion exchange resin are widely known in the art as adsorbents for removing various kinds of foreign materials such as bad-smelling components, colouring components and specific noxious chemicals in gases or liquids. In order to use these activated carbon and ion exchange resin as means for removing bad-smelling components, colouring components and specific noxious chemicals in gases or liquids, they are charged into defined sections between filter-shaped members disposed in a passage for pumped gas or liquid flow. Since the adsorbents occupy a defined section of the apparatus, either a considerably high pressure intensity is required for feeding the gas or liquid or the adsorbent must be prepared in a comparatively large granular size, resulting in a reduced adsorbing efficiency. Heretofore, these drawbacks have been considered unavoidable.

To obviate these drawbacks a technique has been proposed in Japanese Utility Model Publication No. 2025/1982 in which a felt-shaped protective and dust collecting filter comprising glass fibre is placed on one or both sides of a flat-shaped sheet comprising activated carbon fibre to building a layered structure, the former being lightly attached to the latter by needle punching. However, we have found that such layered structure cannot be used for a long period of time because the activated carbon fibre is not adhesively secured to other fibre and tends easily to be damaged.

The present invention has arisen from our work seeking to overcome or to avoid these prior art drawbacks.

In accordance with one aspect of the present invention, there is provided an adsorptive sheet characterised in comprising a non-woven fabric comprising adsorptive fibres and produced from a mix of synthetic fibres having a relatively high melting temperature, synthetic fibres having a relatively lower melting temperature and adsorptive fibres in a manner whereby contact points between said relatively lower melting temperature fibres and other fibres are bound together by softening the said relatively lower melting temperature fibres.

We describe hereinbelow an embodiment of our adsorptive sheet which also has a second nonwoven fabric, comprising synthetic fibres and including synthetic fibres having a relatively high melting temperature and optionally including synthetic fibres having a relatively lower melting temperature. The second non-woven fabric is secured in a layered structure to at least one surface of the first non-woven fabric.

We have produced practical embodiments of adsorptive sheet in accordance with the present invention which have high adsorption efficiency for bad-smelling components, colouring components, and specific noxious chemicals in gases and liquids, and also have excellent porosity, and air permeability, and in which adsorptive fibres are firmly held without any fear that they will flow away in the gas or liquid stream.

We have also found that our practical embodiments can be used for a long period of time without marked reduction of adsorptive power due to removal of dust and mist.

We shall explain below how embodiments of adsorptive sheet can be produced to adsorb and remove a variety of foreign materials including polar material such as chloride ions, ammonium ions, or the like in gases or liquids.

The invention is hereinafter more particularly described by way of example only with reference to the accompanying drawings, in which:-

Fig. 1 is an edge elevational view of an embodiment of adsorptive sheet in accordance with this invention;

Fig. 2 is a similar view of an other embodiment of adsorptive sheet in accordance with the invention;

Fig. 3 is a section view through an embodiment of waterproof adsorptive sheet constructed in accordance with the present invention;

Figs. 4, 5 and fig. 6 are a plan view of different embodiments of rotary type filters each comprising an adsorptive sheet according to the invention;

Fig. 7 is a side elevational view of a plurality of rotary type filters as shown in Fig. 5 rotatably mounted on a single shaft in an equally spaced relation and accommodated in a pipe, shown in section;

Fig. 8 is a perspective view of a filter of columnar form comprising an adsorptive sheet according to the present invention;

Fig. 9 is a longitudinal sectional view of the filter of Fig. 8 mounted within a pipe.

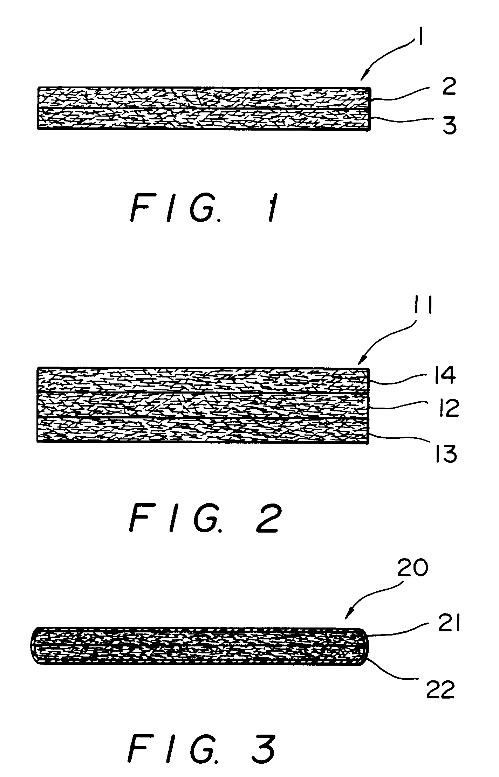

The adsorptive sheet 1 illustrated in Fig. 1 is composed of a nonwoven fabric 2 including adsorptive fibres and a nonwoven fabric 3 including synthetic fibres attached to one surface of the nonwoven fabric 2 in a layered structure.

The nonwoven fabric 2 is produced by mixing adsorptive fibres such as activated carbon fibres, ion exchange fibres and the like with synthetic fibres having a relatively high melting temperature and synthetic fibres having a relatively lower melting temperature and then binding together the thus mixed fibres at their contact points due to softening of the relatively lower melting temperature fibres.

Incidentally, it is not necessary that the relatively high melting temperature fibres be entirely distinct from the relatively lower melting temperature fibres; they may be made integrally formed as conjugated fibre comprising both synthetic polymer having a relatively high melting temperature and synthetic polymer having a relatively lower melting temperature. For instance, it is particularly preferable that the conjugated fibre comprises synthetic high polymer having a relatively high melting temperature as a core and synthetic polymer having a relatively lower melting temperature as a sheath rather than side-by-side type conjugated fibre.

Activated carbon fibre can be made by producing optically isotropic fibre-forming pitch by polymerization of coal tar, forming pitch fibre by spinning the thus produced pitch in a molten state, not allowing the formed pitch fibre to melt (i.e. stabilizing it) by treating it at a temperature in the range of 200 to 400°C in an oxidative gas and then converting it to an activated state by carrying out an activating reaction at a temperature in the range of 600 to 1000°C in an activating gas. Pitch produced by processing petroleum-based or coal-based heavy oils can also be used, as can optically anisotropic pitch.

By not allowing the pitch fibre to melt, the activated carbon fibre has an enlarged network structure. By converting the pitch fibre to an activated state, it has a large number of micropores having a diameter in Angstrom units produced on the surface thereof, resulting in a remarkably increased surface area. Adsorption of foreign material in gases and liquids, such as bad-smelling components, colouring component, and specific chemicals is achieved with the aid of these micropores. The kind of material adsorbed is determined by the diameter of the micropores, and the amount of material adsorbed is determined by number, diameter and depth of the micropores. Although diameter, number, depth or the like of the micropores vary in dependence on raw material and production conditions, we prefer that each of the micropores has a specific surface area in the range of 500 to 2500 $m^2/g$. Further the preferred diameter of the activated carbon fibre is in the range of 7 to 25 microns. The activated carbon fibre may be either filament fibre or staple fibre. In the case of filament fibre, a nonwoven fabric of filament fibre is produced by drawing a number of fibres extruded through a spinning nozzle under the influence of air flow, dispersing them in the air and then randomly depositing then on a web forming machine. Where staple fibre is employed, a nonwoven fabric of staple fibre is produced by cutting the fibre of the aforesaid nonwoven fabric or cutting the filament fibres to a suitable length and then forming the nonwoven fabric using the staple fibres so obtained. By using activated carbon fibre, bad-smelling materials such as hydrogen sulphide, methyl sulphide, methyl mercaptan, trimethyl amine, ammonia and the like can be removed. Moreover, colouring matter, humin-based material, phenol, chlorinated hydrocarbons and the like can be removed.

An ion exchange fibre is the fibre produced by resin including an ion exchange group such as an anion exchange group, a cation exchange group, a chelate group or the like. Anion exchange groups include basic exchange groups obtained by processing halo alkylated fibre with the use of tertiary amines such as trimethyl amine or the like or secondary amine such as dipropyl amine or the like. Cation exchange groups include strong acid cation exchange groups obtained with the use of chlorosulphonic acid and the like and weak acid cation exchange groups obtained with the use of carboxylic acid and the like. Chelate groups include chelate forming functional groups such as iminodiacetic acid and the like. However, the present invention is not limited only to the specific ion exchange groups mention above. By using an ion exchange fibre, acid gases such as hydrogen sulphide, hydrogen halide, sulphurous acid gas and the like can be removed. Moreover, polar materials such as chromic acid, amines and the like can be removed.

For use as the synthetic fibre having a relatively high melting temperature synthetic fibres such as polyester, polyolefin, polyamide and the like are used. For use as the synthetic fibre having a relatively lower melting temperature, we prefer to use fibres that have a softening temperature lower by at least 40°C than that of the relatively high melting temperature fibre also present. Although both the relatively high and relatively lower melting point synthetic fibres are preferably of the same group, a combination of different kinds of synthetic fibres can be used, provided that the fibres have a degree of affinity therebetween.

In the case where both synthetic fibres comprise polyester, it is preferable that polyester having a softening temperature higher than 240°C is used as the relatively high melting temperature fibre and polyester having a softening temperature in the range of 100 to 150°C is used as the relatively lower melting temperature fibre. Specifically, the relatively lower melting temperature fibre is preferably obtained by a reaction between either a dibasic acid or its derivative, a glycol and one or more other dibasic acids or glycols. One specific example is a copolymerized polyester including terephthalic acid, isophthalic acid and ethylene glycol as its main components. Fibres of polyolefin or the like can also be used for the relatively lower melting temperature fibre. When polyester is used for both synthetic fibres, the result is excellent in respect of bulkiness and elastic restorability . Other alternatives include the use of polypropylene as the relatively high melting temperature fibre and polyethylene, polystyrene, ethylene-propylene copolymer and the like as the relatively lower melting temperature fibre.

As mentioned above, the relatively high and relatively lower melting temperature fibres may be provided as a conjugated fibre. The preferred fineness for the aforesaid conjugated fibre is less than 10 deniers. However, the present invention should not be limited only to this. We further prefer that the fineness of the polymer having the relatively higher melting temperature in the conjugated fibre is in the range of 1/2 to 1/6 of the fineness of the whole conjugated fibre.

We prefer that the relatively high and relatively lower melting temperature fibres are cut to a length of 50 to 150 mm and subjected to crimping in order to ensure that blending by means of a card to be described later is effected satisfactorily and binding to the adsorptive fibre is easily achieved.

We shall now describe in detail how an embodiment of adsorptive sheet as shown in Fig. 1 may be produced. Adsorptive fibre, synthetic fibre having a relatively high melting temperature and synthetic fibre having a relatively lower melting temperature are supplied to a card or similar machine in which they are dispersed and mixed with one another to form a web and the web so obtained is transferred to a hot air furnace or the like in which it is heated to an intermediate temperature between the softening temperatures of the relatively high melting temperature fibre and the relatively lower melting temperature fibre in order that the lower melting temperature fibre is softened to bind the other fibre at their contact points. Thus, a nonwoven fabric 2 comprising adsorptive fibre which has good strength, bulkiness and elasticity is obtained, as shown in Fig. 1.

Another nonwoven fabric 3 of synthetic fibre is secured to the lower surface of the fabric 2 in a layer structure. The nonwoven fabric 3 is constituted only by synthetic fibre such as polyester, polyamide, polyolefin and the like having a relatively high melting point or it is constituted by a mixture of the aforesaid synthetic fibres and synthetic fibres having a relatively lower melting temperature substantially similar to that of the fibres of the fabric 2. It should be noted that the synthetic fibres having relatively high melting temperature and having a relatively lower melting temperature may be provided as conjugated fibre. Further, it should be noted that this nonwoven fabric may also include adsorptive fibres therein.

Where both the nonwoven fabrics 2 and 3 include synthetic fibres having a relatively lower melting temperature, they can be bound together by softening the lower melting temperature fibres. In the case where the nonwoven fabric 3 does not include relatively lower melting temperature fibres, it is subjected to needling to ensure the fibres of the two nonwoven fabrics 2 and 3 are sufficiently entangled with one another that the two layers of fabric do not delaminate.

Since the finished adsorptive sheet 1 includes the synthetic fibre nonwoven fabric 3 as one layer, that fabric can remove dust, mist or the like foreign material which may reduce the adsorptive effect of the adsorptive fibre. The adsorptive sheet 1 thus has an increased useful adsorptive life.

In one example, for the activated carbon fibre nonwoven fabric 2, pitch having a softening temperature of 279.7°C (measured in accordance with Metra's method), quinoline-based insoluble content (Q1) of 34.5% by weight and benzene-based insoluble content (B1) of 79.0% by weight (Analysis of Q1 and B1 was carried out in accordance with Japanese Industrial Standard K-2425) was used as raw material. Visual observation with a polarization microscope showed that his pitch was optically isotropic. It exhibited a noncrystalline halo in its X ray powder diffraction pattern.

100 Kg of the aforesaid isotropic pitch was crashed at room temperature and the crashed pitch was supplied to the melting portion of a spinning machine including a single screw extruder having a diameter of 40 mm. The pitch which was kept in a molten state at a temperature of 335°C was discharged through a spinning nozzle having 128 extruding holes at a rate of 0.625 g/min. per extruding hole to produce pitch fibre. The produced pitch fibres were subjected to drawing by operating an air sucker and dispersed by operating an air blowing machine and then randomly deposited on a net conveyor to form a web. The web so obtained was heated to a temperature of 200°C from room temperature for 30 minutes in an oxidative atmosphere ($NO_2$ of 50% by volume) and thereafter it was heated to a temperature of 400°C for 90 minutes whereby it assumes a state in which it does not melt. Further, the web was subjected to activating at an activating temperature of 850°C for 30 minutes using steam.

Adsorptive properties of this activated carbon fibre were represented by a specific surface area of 1782 $m^2/g$ (measured in accordance with BET method), benzene adsorptive force of 45% by weight (measured in accordance with Japanese Industrial Standard K-174) and average diameter of micropore of 17 Angstroms, while fibrous properties of the same were represented by a fibre diameter of 17 microns, a fibre strength of 14 $Kg/mm^2$ measured in accordance with Japanese Industrial Standard R-7601, an elastic modulus of 1100 $Kg/mm^2$ and an elongation of 2.1%.

Fibrous binder (produced by Unitika Ltd. under the tradename of "Melty" and having 4 denier per fibre, a fibre length of 51 mm, a fibre strength of 3.2 g/denier, an elongation of 45% and a softening temperature of 110°C) was added to the activated carbon fibre using a roller card with metallic wires of 15/1000 gauge to form a mixed web at a rate of 50 m/min. The fibrous binder was a conjugated fibre of which the core portion was constituted by polyethylene terephthalate having a softening temperature of 240°C and of which the sheath portion was constituted by copolymerized polyester having a softening temperature of 110°C. The obtained web was subjected to needling at a density of one needle/cm$^2$ with the use of a needle punching machine and then compressed by means of a hot press roller while it was heated in order to adjust its thickness and set the structure of the web, thus, obtaining a sheet.

For the nonwoven fabric 3, a polyethylene terephthalate fibre web was produced by means of a roller card using polyethylene terephthalate fibre having a softening point of 240°C, a fineness of 2 denier per fibre, and a fibre length of 51 mm, a fibre strength of 4.5 g/denier and elongation of 32%. The web was subjected to needling with the use of a needle punching machine.

After the nonwoven fabrics 2 and 3 were laid horizontally one above another in a layered structure, they were subjected to needling at a density of one needle/cm$^2$ by means of a needle punching machine and they were then compressed by means of a hot press roller while they were heated in order to adjust their combined thickness and set the structure of the web, providing an uniform flat sheet.

Fig. 2 illustrates another embodiment of adsorptive sheet 11 also in accordance with this invention and having synthetic fibre nonwoven fabrics 13 and 14 secured in a layered structure to both surfaces of a nonwoven fabric 12 comprising adsorptive fibres. The nonwoven fabric 12 has the same structure as fabric 2 and the nonwoven fabrics 13 and 14 have the same structure as fabric 3. In the case where the nonwoven fabrics 13 and 14 include relatively lower melting temperature fibres, securing of the fabrics 13 and 14 to the fabric 12 may be achieved by heat binding, while in the case where they do not include relatively lower melting temperature fibre, the aforesaid securing is achieved by needling. Either or both of the nonwoven fabrics 13, 14 may include relatively lower melting temperature fibres. With this structure, in which synthetic fibre nonwoven fabrics 13, 14 are secured to both surfaces of the adsorptive nonwoven fabric 12 in a layered structure, unexpected separation (dropping) of the adsorptive fibres and adhering of dirty material due to direct contact with the adsorptive fibres can be prevented, adding a further advantage to those already present in the first described embodiment.

A rigid sheet may be embedded between the nonwoven fabrics 2 or 12 and the nonwoven fabrics 3, 13 or 14. A woven fabric sheet, a knitted fabric sheet, a net or the like made of metallic or plastic materials may be used as the rigid sheet. Since relatively low strength adsorptive fibres are reinforced with synthetic fibres and with a rigid sheet in this construction, the adsorptive sheet has excellent strength and can be used in a wide scope of applications.

Various materials can be included in the nonwoven fabrics 2, 12 and the nonwoven fabrics 3, 13, 14. For instance, when copper fibres having an extremely small diameter in the range of 20 to 40 microns is included in either of the layers constituting the adsorptive sheet, bactericidal and anti-static properties can be improved. Further, when a water absorptive fibre is included the water absorption ability is enhanced.

A waterproof adsorptive sheet 20 as shown in Fig. 3 comprises an adsorptive sheet 21 as in Fig. 1 covered with an air permeable waterproofing sheet 22. The air permeable waterproofing sheet 22 comprises a hydrophobic plastics sheet having a large number of fine pores formed therethrough. Sheets of polyolefin, fluorocarbon resin, polyamino acid and the like may be used for the plastics sheet. In order to form fine pores, various means such as laser beam radiation and the like may be employed. We prefer that each of the fine pores has a configuration in which the pore diameter is smaller at the extreme ends of the pore than it is in the middle portion thereof. In order to produce such a configuration, each end of the pore may be contracted or may have another material added which can be solidified later. When the plastic sheet has fine pores of this configuration, we have found that the resultant sheet has good waterproof properties, and good air and moisture permeability. The adsorptive fibre sheet 21 may be the equivalent of the nonwoven adsorptive fibre fabrics 2, 12. The thus obtained waterproof adsorptive sheet 20 can be used as it is. A water absorptive cloth or the like may be placed over the outside thereof in a layered structure or the outer periphery thereof may be covered with a water absorptive cloth of cotton, wool, rayon or the like material or a cloth of synthetic fibres or like material.

The waterproof adsorptive sheet 20 can be used as a floor cloth or as a deodorization cloth.

Adsorptive sheets constructed in accordance with the invention can be designed for use as cleaning filters for cleaning air in a factory, room or the like and for cleaning liquid containing colouring components or the like. In addition such sheets can be designed for use in applications such as medical goods including masks, medical sheets, medical suits, base fabric for stupes, bandages and the like, or covers, diapers, physiological goods, dust bags for kitchen waste, curtains, gloves, fire escape means, and so on.

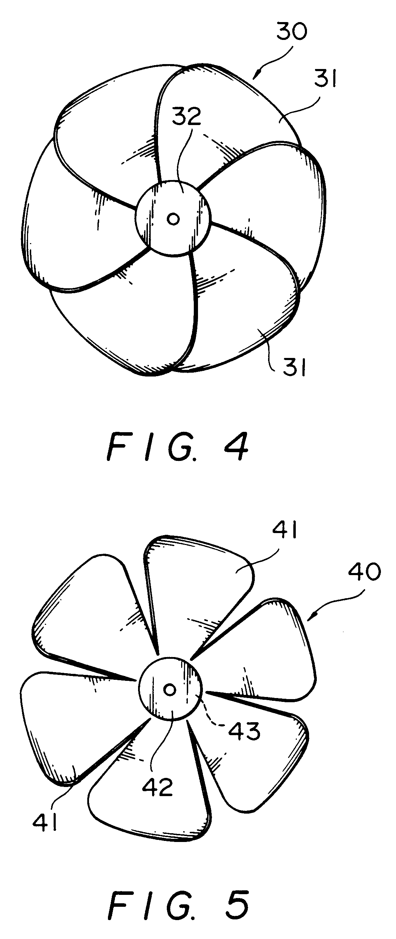

Fig. 4 illustrates use of an adsorptive sheet in accordance with the invention in a filter 30 which comprises a plurality of blades 31 of adsorptive sheet and a boss 32. Each of the blades 31 of adsorptive sheet assumes a substantially elliptic shape. However, the present invention should not be limited only to this. The blades 31 may assume various shapes such as a circular shape. The plurality of blades 31 of adsorptive sheet are secured to the outer periphery of the boss 32 in an inclined state like a propeller. When they are seen in the feed direction for air or liquid, the blades 31 overlap partially. Since the blades 31 are secured to the boss 32 in an overlapped relation, they come in contact with air or liquid at a high contact efficiency. Moreover, since they are secured to the boss 32 in an inclined state like a propeller, air or liquid flows without stoppage by the blades 31, flowing along the blades after coming in to contact with them. Thus, air or liquid passes through space between adjacent blades 31. As a result, air or liquid is fed past the filter with minimized loss in pressure, accompanied by a corresponding energy saving.

Since the adsorptive blades 31 are rotated by means of a shaft fitted through the boss 32, they come into contact with air or liquid at an increased contact efficiency, resulting in foreign materials such as bad-smelling materials or the like being removed at a high operative efficiency.

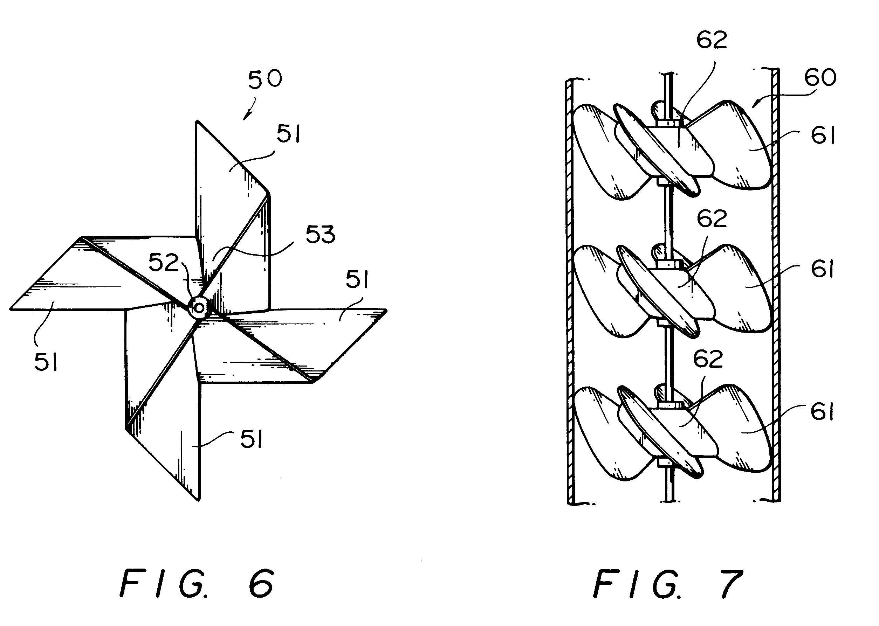

The blades 31 are made of the aforesaid adsorptive sheet or of nonwoven adsorptive fibre fabric. It is particularly preferably that these be made of core-sheath type conjugated fibre. Each of the blades 31 is constituted by a single layer or adsorptive sheets 1 or 11 of of nonwoven adsorptive fabrics 2 or 12. However, the present invention should not be limited only to this. Alternatively, it may be constituted in the form of a multi-layer structure of which the outer layer is made of adsorptive sheet 1, 11 or of nonwoven adsorptive fabric 2, 12 and of which the inner layer is made of a net of metallic material or plastics material, paper, nonwoven fabric, or of a moulded product of plastics material or the like. Where impermeable material such as metallic material, plastics material or the like is employed for the inner layer, increased strength is obtained but removal of foreign materials such as bad-smelling materials or the like is achieved only by contact with gas or liquid because no gas or liquid passes therethrough. On the other hand, in the case where relatively high strength porous materials such as net or the like is employed for the inner layer, not only increased strength is assured but also a further increased contact efficiency with gas or liquid is obtained due to the fact that gas or liquid can now pass through the blade, resulting in the efficiency of removal of bad-smelling materials and the like being increased. As shown in Figs. 5 and 6, a rotary type filter may comprise a plurality of blades made of adsorptive sheet made integral with one another at the central part thereof. For instance, as shown in Fig. 5, a rotary type filter 40 may be made from a circular adsorptive sheet by forming a plurality of cutouts extending radially inwardly towards a central portion 43 to form a plurality of blades 41, inclining each of the blades 41, causing them to be set thermally and then securing two bosses 42 to the central portion 43. Further, as shown in Fig. 6, a rotary type filter 50 may be made by forming cutting lines each of which extends from a corner of a square sheet toward the centre part thereof to form a plurality of blades 51, folding one edge of the four blades 51 toward the centre and then fixedly securing the folded blades 51 to two bosses 52 located at the centre.

In order to increase contact efficiency with gas or liquid, it is possible to change the area of each blade, the number of blades and the distance between adjacent blades. The rotary type filter may be firmly fixed to a rotational shaft in order to ensure that it rotates positively. Further, as shown in Fig. 7, a plurality of rotary filters 60 each of which comprises a plurality of blades 61 and a boss 62 may be arranged in the direction of flow of air or liquid.

Besides rotary type filters as shown in the drawings, filters in accordance with an aspect of this invention can take other known forms. Our filters have been shown to have good contact efficiency with gas or liquid. Practical embodiments can substantially completely adsorb and remove foreign materials such as bad-smelling materials, colouring materials and the like in gases or liquids. Thus, they exhibit excellent practical advantages.

Rotary type filters may be used for the purpose of removing various foreign materials in gas (for instance, waste gas coming from a diazo type copying machine) or liquid and moreover they can remove bad-smelling materials and the like in a room, refrigerator or the like.

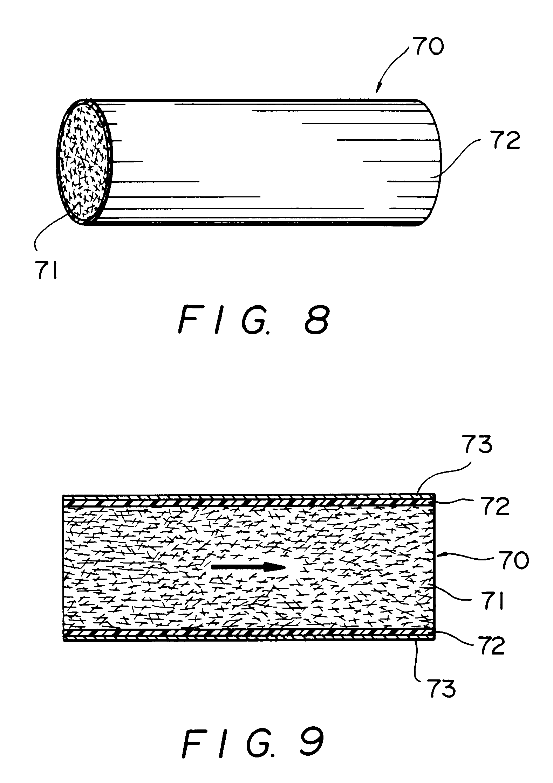

Figs. 8 and 9 illustrate an adsorptive filter 70 having a columnal shaped adsorptive mass 71 covered with a water impermeable film 72 made of synthetic resin such as polyethylene, polyvinyl chloride, polyamide, polyester or like materials. Ideally the film should exhibit substantial thermal shrinkage so that it will shrink into close contact with the columnal shaped adsorptive mass 71 when heated. The adsorptive mass 71 is formed by tightly rolling an adsorptive sheet 1 or 11 or a nonwoven adsorptive fabric 2 or 12. The adsorptive filter 70 is used by fitting it into a pipe 73. Due to the fact that the adsorptive mass 71 is covered with the water impermeable film 72, there is no fear that liquid to be filtered may leak to the outside through the film 72. Further, any leakage of liquid at the ends of the filter can be prevented by fitting to the ends thereof a member covering the outer peripheral area of the filter. By making the length of the impermeable film 72 longer than that of the adsorptive mass 71 and liquidtightly fixing an extended part of the film to the pipe, any leakage of liquid to be filtered can be reliably prevented.

## Claims

1. An adsorptive sheet characterised in comprising a non-woven fabric comprising adsorptive fibres and produced from a mix of synthetic fibres having a relatively high melting temperature, synthetic fibres having a relatively lower melting temperature and adsorptive fibres in a manner whereby contact points between said relatively lower melting temperature fibres and other fibres are bound together by softening the said relatively lower melting temperature fibres.

2. An adsorptive sheet according to Claim 1, further characterized in comprising a second nonwoven fabric, comprising synthetic fibres and including synthetic fibres having a relatively high melting temperature and optionally including synthetic fibres having a relatively lower melting temperature, the said second non-woven fabric being secured in a layered structure to at least one surface of said first non woven fabric.

3. An adsorptive sheet according to Claim 1 or Claim 2, further characterised in that said adsorptive fibre comprises one or both of activated carbon fibre, and ion exchange fibre.

4. An adsorptive sheet according to any preceding claim, further characterised in that relatively high melting temperature fibre and relatively lower melting temperature fibre in the same layer are integrally formed with one another as conjugated fibre.

5. An adsorptive sheet according to Claim 4, further characterised in that said conjugated fibre is constituted such that synthetic polymer having a relatively high melting temperature serves as a core component and synthetic polymer having a relatively lower melting temperature serves as a sheath component.

6. An adsorptive sheet according to any of Claims 2 to 5, further characterised in that the first and second nonwoven fabrics are secured to one another by allowing the relatively lower melting temperature fibres to soften to bind the two fabrics inseparably together.

7. An adsorptive sheet according to any of Claims 2 to 5, further characterised in that the first and second nonwoven fabrics are secured to one another by allowing fibre to be entangled together under the effect of needling.

8. An adsorptive sheet according to any preceding claim, further characterised in that a rigid sheet is embedded between two layers of nonwoven fabric, and preferably between two layers of adsorptive fibre fabric.

9. An adsorptive sheet according to any preceding claim, further characterised in that said sheet is covered with an air permeable waterproofing sheet.

10. A filter comprising an adsorptive sheet according to any preceding claim.

11. A filter according to Claim 10, further characterised in that said adsorptive fibre sheet is utilized in the blades, paddle or disc of a rotary type filter.

12. A filter according to Claim 11, further characterised in that a plurality of blades comprising said adsorptive sheet are fixedly secured to a boss fixedly mounted on a rotational shaft or to a boss rotatably mounted on a stationary shaft in a spaced relation.

13. A filter of columnar form, characterised in comprising an adsorptive sheet according to any of Claims 1 to 7 rolled into a column-shape and gastightly and liquidtightly covered with a gas and liquid impermeable film.

## Revendications

1. Nappe adsorbante caractérisée en ce qu'elle comporte un tissu non-tissé prévoyant des fibres adsorbantes produit à partir d'un mélange de fibres synthétiques à température de fusion relativement élevée, des fibres synthétiques à température de fusion relativement plus faible et des fibres adsorbantes de telle façon que les points de contact entre lesdites fibres de température de fusion relativement plus faible et d'autres fibres sont reliés par le ramollissement desdites fibres de température de fusion plus faible.

2. Nappe adsorbante selon la revendication 1, en outre caractérisée en ce qu'elle comporte un deuxième tissu non-tissé, prévoyant des fibres synthétiques et contenant des fibres synthétiques de température de fusion relativement élevée et en option contenant des fibres synthétiques à température de fusion relativement plus faible, ledit deuxième tissu non-tissé étant rattaché dans une structure stratifiée à une surface au minimum dudit premier tissu non-tissé.

3. Nappe adsorbante selon la revendication 1 ou la revendication 2, caractérisée en outre en ce que ladite fibre adsorbante comporte l'une ou les deux des fibres de carbone actif et d'échange d'ion.

4. Nappe adsorbante selon l'une ou l'autre des revendications précédentes, caractérisée en outre en ce que la fibre de température de fusion relativement élevée et la fibre de température de fusion relativement plus faible dans la même couche sont formées intégrales l'une avec l'autre sous forme de fibre conjointe.

5. Nappe adsorbante selon la revendication 4, en outre caractérisée en ce que ladite fibre conjointe est de telle constitution qu'un polymère synthétique de température de fusion relativement élevée sert d'élément de l'âme et qu'un polymère synthétique de température de fusion relativement plus faible sert d'élément de fourreau.

6. Nappe adsorbante selon l'une ou l'autre des revendications 2 à 5, en outre caractérisée en ce que le premier et le deuxième tissu non-tissé sont rattachés l'un à l'autre en permettant aux fibres de température de fusion relativement plus faible de ramollir afin de lier les deux tissus de façon inséparable.

7. Nappe adsorbante selon l'une ou l'autre des revendications 2 à 5, en outre caractérisée en ce que le premier et le deuxième tissu non-tissé sont rattachés l'un à l'autre en faisant emmêler les fibres par aiguilletage.

8. Nappe adsorbante selon l'une ou l'autre des revendications précédentes, en outre caractérisée en ce qu'une nappe rigide est encastrée entre deux couches de tissu non-tissé, et de préférence entre deux couches de tissu de fibre adsorbante.

9. Nappe adsorbante selon l'une ou l'autre des revendications précédentes, en outre caractérisée en ce que ladite nappe est recouverte d'une nappe étanche à l'eau perméable à l'air.

10. Filtre comportant une nappe adsorbante selon l'une ou l'autre des revendications précédentes.

11. Filtre selon la revendication 10, en outre caractérisé en ce que ladite nappe adsorbante est exploitée dans les pales, ailettes ou le disque d'un filtre du genre rotatif.

12. Filtre selon la revendication 11, en outre caractérisé en ce qu'une série de pales comportant ladite nappe adsorbante est montée fixe à espacement sur un moyeu monté fixe sur un axe de rotation ou un moyeu rotatif sur un axe fixe.

13. Filtre en forme de colonne, caractérisé en ce qu'il comporte une nappe adsorbante selon l'une ou l'autre des revendications 1 à 7 enroulée sous forme de colonne et recouverte d'une pellicule étanche et imperméable au gaz et au liquide.

**Patentansprüche**

1. Adsorptives Blatt, dadurch gekennzeichnet, daß es ein Vlies umfaßt, das Adsorptionsfasern enthält und hergestellt worden ist aus einer Mischung von synthetischen Fasern mit einer relativ hohen Schmelztemperatur, synthetischen Fasern mit einer relativ niedrigen Schmelztemperatur und Adsorptionsfasern, wobei Kontaktpunkte zwischen den Fasern mit der relativ niedrigeren Schmelztemperatur und anderen Fasern durch Erweichung der Fasern mit der relativ niedrigen Schmelztemperatur untereinander verbunden werden.

2. Blatt nach Anspruch 1, dadurch gekennzeichnet, daß es ein zweites Vlies umfaßt, das synthetische Fasern enthält und synthetische Fasern mit einer relativ hohen Schmelztemperatur und gegebenenfalls synthetische Fasern mit einer relativ niedrigen Schmelztemperatur einschließt, wobei das zweite Vlies in einer Schichtstruktur mit wenigstens einer Oberfläche des ersten Vlieses verbunden ist.

3. Blatt nach Anspruch 1 oder Anspruch 2, dadurch gekennzeichnet, daß die Adsorptionsfasern aktivierte Kohlefaser und/oder Ionenaustauscherfasern umfassen.

4. Blatt nach einem der vorhergehenden Ansprüche, dadurch gekennzeichnet, daß die Faser mit relativ hoher Schmelztemperatur und die Faser mit relativ niedrigerer Schmelztemperatur in derselben Schicht einheitlich als Verbundfaser ausgebildet sind.

5. Blatt nach Anspruch 4, dadurch gekennzeichnet, daß die Verbundfaser so aufgebaut ist, daß ein synthetisches Polymer mit einer relativ hohen Schmelztemperatur als Kernkomponente und ein synthetisches Polymer mit einer relativ niedrigeren Schmelztemperatur als Umhüllungskomponente dienen.

6. Blatt nach einem der Ansprüche 2 bis 5, dadurch gekennzeichnet, daß das erste und das zweite Vlies dadurch miteinander verbunden worden sind, daß man die Fasern mit relativ niedrigerer Schmelztemperatur erweichen läßt, um die beiden Gewebe untrennbar miteinander zu verbinden.

7. Blatt nach einem der Ansprüche 2 bis 5, dadurch gekennzeichnet, daß das erste und zweite Vlies dadurch miteinander verbunden sind, daß die Fasern durch Vernadelung miteinander verfilzt sind.

8. Blatt nach einem der vorhergehenden Ansprüche, dadurch gekennzeichnet, daß ein steifes Blatt zwischen zwei Vliesschichten eingebettet ist, und zwar vorzugsweise zwischen zwei Adsorptionsfasergewebeschichten.

9. Blatt nach einem der vorhergehenden Ansprüche, dadurch gekennzeichnet, daß es mit einem luftdurchlässigen wasserdichten Blatt abgedeckt ist.

10. Filter, umfassend ein adsorptives Blatt nach einem der vorhergehenden Ansprüche.

11. Filter nach Anspruch 10, dadurch gekennzeichnet, daß das Adsorptionsfaserblatt in den Flügeln, Paddeln oder Scheiben eines Filters vom Rotationstyp eingesetzt wird.

12. Filter nach Anspruch 11, dadurch gekennzeichnet, daß eine Vielzahl von Flügeln, die das adsorptives Blatt umfassen, mit Abstand zueinander fest mit einer Nabe verbunden sind, die auf einer Rotationswelle fest montiert ist, oder mit einer Nabe, die rotierbar auf einer stationären Welle montiert ist.

13. Filter in Säulenform, dadurch gekennzeichnet, daß es ein adsorptives Blatt nach einem der Ansprüche 1 bis 7 umfaßt, das zu einer Säulenform aufgerollt und gas- und flüssigkeitsdicht mit einem gas- und flüssigkeitsundurchlässigen Film bedeckt ist.

F I G. 1

F I G. 2

F I G. 3

FIG. 4

FIG. 5

50

51

53

52

51

51

51

51

*F I G. 6*

62

60

61

62

61

62

61

*F I G. 7*

EP 0 269 462 B1

70

72

71

F I G. 8

73

72

70

71

72

73

F I G. 9